# EUROPÄISCHE PATENTANMELDUNG

(11) **EP 0 575 631 A1**
(43) Veröffentlichungstag der Anmeldung: **29.12.1993**
(21) Anmeldenummer: 92107080.1
(22) Anmeldetag: 25.04.1992
(51) Int. Cl.: B29C 49/24, G09F 3/04

(54) **In-Mould-Labeling-Etikett**

(71) Anmelder: rota-Druck W. Kieser KG, D-86356 Neusäss (DE)
(72) Erfinder: Sailer, Helmut, W-8890 Aichach (DE)
(74) Vertreter: Ernicke, Hans-Dieter, Dipl.-Ing.

(57) **Zusammenfassung**

Die Erfindung betrifft ein recyclingfähiges IML-Etikett (1) für wiederverwertbare Kunststoffbehälter (2) und ein Verfahren zu seiner Herstellung. Das IML-Etikett (1) weist als Kunststoffkomponente nur Polyäthylen oder Polypropylen auf und wird durch In-Mould-Labeling bei der Behälterherstelung in der Behälterwand (3) eingebettet. Vorzugsweise besteht das IML-Etikett (1) im wesentlichen aus einer einzigen Kunststoffsorte und entspricht dem Behältermaterial. Es weist neben Polyäthylen oder Polypropylen als Zusatzkomponenten einen Filler und einen Farbstoff auf. Das IML-Etikett (1) wird als einlagige Folie (5) ausgebildet.

## Beschreibung

Die Erfindung betrifft ein recyclingfähiges In-Mould-Labeling-Etikett aus Kunststoff. Es wird nachfolgend abgekürzt als IML-Etikett bezeichnet.

IML-Etiketten werden auf Kunststoff-Behältern angebracht, die durch Blasformen hergestellt werden. Häufig bestehen die Behälter aus Polyäthylen. Die Applikation des Etiketts erfolgt während der Behälterherstellung innerhalb der Blasform durch das sogenannte In-Mould-Labeling-Verfahren. Das IML-Etikett wird dabei in die Behälterwand versenkt eingebettet. Das eigentliche IML-Etikett kann zur Applikationserleichterung eine zusätzliche Beschichtung mit einem Haftvermittler aufweisen. Außer IML-Etiketten gibt es auch Selbstklebe-, Schrumpf- und sonstige Etiketten, die nachträglich auf den Behältern angebracht werden.

Bei Kunststoffgebinden besteht die Forderung nach Recyclingfähigkeit. Ein eingebettetes IML-Etikett kann bei der späteren Entsorgung der leeren Behälter nicht wieder entfernt werden und muß von daher zusammen mit dem Behälter recyclingfähig sein. Dabei besteht das Problem, daß sich IML-Etiketten mit bestimmten Materialien für das Recycling störend oder sogar hemmend auswirken. Dies betrifft z.B. IML-Etiketten mit Anteilen aus Papier, Cellulose, Metall oder unverträglichen Kunststoffen. Dadurch lassen sich Behälter und IML-Etikett nicht in einem wirtschaftlichen Rahmen wiederverwerten und zu höherwertigen Kunststoffprodukten weiterverarbeiten. Die genannten Materialien können bei der Kunststoff-Weiterverarbeitung zu Betriebs- oder Materialstörungen führen.

Zum Beispiel wird zur Wiederverwertung der Behälter samt IML-Etikett zerkleinert und aufbereitet. Das so gewonnene Granulat wird dann wieder plastifiziert und zum Blasformen neuer Behälter eingesetzt. Durch die oben genannten Materialien können sich Schwachstellen im Folienschlauch bilden. An diesen Stellen reißt beim Blasformen die Behälterwand. Ähnliches kann auch bei anderen Wiederverwertungen, wie der Plattenherstellung etc., geschehen. Damit ist die besonders wünschenswerte Wiederverwertung beim Hersteller nicht möglich.

Aus der US-C-4,837,075 ist ein IML-Etikett bekannt, das recyclingfähig sein soll. Das eigentliche IML-Etikett besteht aus mehreren Materiallagen und weist zusätzlich eine Beschichtung mit einem Haftvermittler auf. Die Etiketten-Materiallagen bestehen ihrerseits aus mehreren unterschiedlichen Kunststoffen. Die zur Bedruckung vorgesehene Lage oder Schicht weist einen hohen Anteil von 75 bis 90 Gew.-% Polystyrol und einen niedrigeren Anteil von 25 bis 2 Gew.-% an Pigmenten oder Filler auf. Unter der bedruckten Schicht kann eine Zwischenschicht aus einem Copolymer von Äthylen und einem Comonomer angeordnet sein, wobei das Comonomer aus 1 bis 30 Gew.-% einer copolymerisierbaren äthylenischen ungesättigten Carboxylsäure oder eines solchen Esters besteht. Das Kunststoff-IML-Etikett wird als mehrlagige Schlauchfolie extrudiert. Auf der Unter- oder Rückseite des IML-Etiketts ist der besagte Haftvermittler oder Thermokleber angeordnet, der aus Niederdruck-Polyäthylen und einem Copolymer aus Äthylen und Vinyl-Acetat besteht.

Bei dem bekannten IML-Etikett und dem Behälter können die eingangs genannten Recycling-Probleme auftreten. Das im IML-Etikett verwendete Polystyrol verträgt sich nicht mit dem Polyäthylen des Behälters und führt zu den besagten Schwachstellen. Nachteilig ist auch das Kunststoffgemisch der Zwischenschicht, das ebenfalls eine Wiederverwertung erschwert oder gar unmöglich macht.

Das vorbekannte IML-Etikett ist außerdem durch seinen mehrlagigen Aufbau nur mit großem Aufwand und entsprechend hohen Kosten herstellbar. Problematisch ist im weiteren die Formfestigkeit der Folie. Bei Verzug kann es zu einer mangelhaften Paßgenauigkeit und Druckqualität auf Standard-Druckmaschinen kommen.

Aus der DE-A-2 456 715 ist ein weiteres IML-Etikett für Polyolefin-Flaschen bekannt. Das IML-Etikett besteht aus Polyolefin-Fasern oder einem Gemisch von Polyolefin- und Cellulose-Fasern. Es wird dabei vorgeschlagen, für IML-Etikett und Flasche das gleiche Polyolefin zu verwenden. Ein reines Polyolefin-Etikett ist bei der Herstellung und Applikation nicht ausreichend stabil. Das aus dem Fasergemisch bestehende IML-Etikett wirft durch den Cellulose-Anteil Probleme bei der Wiederverwertung auf.

Aus der US-C-4,883,697 ist ein weiteres IML-Etikett bekannt, das aus zwei oder mehr Lagen besteht. Es kommt zwar Polyäthylen als Kunststoffkomponente vor. Sie ist jedoch von einer metallisierten Schicht und auch einer Etikettenschicht aus PET begleitet, die Wiederverwertungsprobleme aufwerfen.

Aus der DE-A-1 786 237 ist ferner noch ein IML-Etikett konventioneller Art bekannt, das aus Papier besteht. Auf der Etikettenrückseite wird ein Hot-melt-Kleber gitterförmig aufgetragen.

Es ist Aufgabe der vorliegenden Erfindung, ein recyclingfähiges IML-Etikett aufzuzeigen, das sich kostengünstig herstellen und problemlos mit dem Behälter wiederverwerten läßt.

Die Erfindung löst diese Aufgabe mit den Merkmalen im Sach- und Verfahrenshauptanspruch.
Der Behälter kann mit dem IML-Etikett problemlos der Wiederverwertung zugeführt werden. Aus dem recycelten Material können ohne Qualitätseinbußen wieder neue Behälter hergestellt werden. Insbesondere ist eine erneute Behälterherstellung durch Blasformen ohne Gefahr von Rißbildungen, Undichtigkeiten etc. möglich. Auch können dabei die Etiketten wiederum ohne Einschränkung im In-Mould-Labeling-Verfahren aufgebracht werden. Es sind allenfalls unter Umständen Farbabstimmungen im Behältermaterial erforderlich.

Das IML-Etikett enthält als Kunststoffkomponente im wesentlichen nur Polyäthylen oder Polypropylen. Vorzugsweise besteht das IML-Etikett dabei nur aus einer einzigen Kunststoffsorte. Es sind jedoch in kleinen Mengen Beimischungen des jeweils anderen Materials möglich. Auch andere mit Polyäthylen oder Propylen verträgliche Kunststoffe können in Spuren vorhanden sein, empfehlenswert sind allerdings reine Materialien. Papier oder Metall ist im erfindungsgemäßen IML-Etikett vorzugsweise überhaupt nicht enthalten.

Um die mechanischen Eigenschaften des Polyäthylens oder Polypropylens im IML-Etikett zu verbessern, ist der Einbau eines Fillers vorgesehen. Für die Wiederverwertung empfiehlt sich ein cellulose-freier Filler. Vorzugsweise besteht der Filler aus den in den Unteransprüchen genannten verträglichen Materialien.

Zur Grundfärbung können Farbstoffe zugesetzt werden. Die Anteile dieser Zuschlagstoffe im Ausgangsgemisch können variieren. Auf den Zuschlag eines Farbstoffs kann auch verzichtet werden. Beispielsweise kann voreingefärbtes Polyäthylen oder Polypropylen Verwendung finden.

Ausgeglichene Eigenschaften des fertigen IML-Etiketts ergeben sich bei einem Filleranteil von 50 bis 70 Gew.-% und einem Kunststoffanteil von 45 bis 25 Gew.-%. Für die Einfärbung können als Zuschlag noch 5 Gew.-% Farbstoff beigefügt werden. Die angegebenen Werte eignen sich sowohl für Polyäthylen wie für Polypropylen. Besonders gute Ergebnisse lassen sich mit HD-Polyäthylen erzielen. Es sind aber auch LD-Polyäthylen oder andere Polyäthylene und Mischungen der Materialien brauchbar.

Um besonders gute Eigenschaften und ein optimales Erscheinungsbild des IML-Etiketts zu erzielen, empfiehlt sich für das Ausgangsmaterial eine Mischung aus 50 bis 60 Gew.-% Filler bei 45 bis 35 Gew.-% HD-Polyäthylen und einem Farbanteil von 5 Gew.-%.

Der Filler und die Farbstoffe können aus unterschiedlichen Substanzen bestehen. Als Filler eignen sich beispielsweise Calciumcarbonat, Talkum, Titandioxid, Kieselerde oder dgl. Bevorzugt wird ein als "Papiercompound" bezeichneter und unter diesem Namen im Handel erhältlicher Filler, der dem Kunststoff-IML-Etikett papierähnliche Eigenschaften verleiht, was die Griffigkeit, die Stabilität und die Verarbeitungseigenschaften angeht.

Der Filler kann zugleich Farbstoff sein, was beispielsweise bei der Verwendung von Titandioxid der Fall ist. Der Farbstoffanteil kann dann dem Filleranteil zugeschlagen werden. Der Farbstoff kann auch Polyäthylen oder Polypropylen als Trägersubstanz enthalten. Dieser Anteil kann bei den Mischungsangaben unberücksichtigt bleiben.

Es empfiehlt sich, den Filleranteil insgesamt nicht über 70 % anwachsen zu lassen, da dies Versprödungserscheinungen nach sich ziehen könnte. Auch der Glanz könnte leiden. Bei Annäherung an diesen Grenzwert kann der Prozentanteil des Farbstoffs auch dem Kunststoffanteil zugeschlagen werden, wenn der Filler zugleich Farbstoff ist.

Die Beifügung von Filler erhöht die Dimensions- oder Formstabilität des IML-Etiketts und verbessert auch die Planlage. Zur Optimierung dieser Eigenschaften und der Verträglichkeit mit der Kunststoffkomponente sollte der Filler besonders getrocknet und thermisch vorbehandelt werden. Der Filler wirkt sich außerdem günstig für das Schneiden und Stanzen des IML-Etikettes aus. Er verhindert trotz der Erwärmung der IML-Etiketten beim Schneid- oder Stanzvorgang ein Verkleben. Der Filler erhöht ferner die Thermostabilität der Kunststoffkomponenten insbesondere des Polyäthylens. Außerdem wirkt sich der Filler günstig auf die Opazität des IML-Etiketts aus, die Behältergrundfarbe scheint nicht durch.

Das Behältermaterial und der Etikettenwerkstoff können unterschiedlich sein. Beispielsweise kann ein IML-Etikett aus Polypropylen auch für einen Polyäthylen-Behälter Verwendung finden. Die Wiederverwertbarkeit ist in Grenzen gegeben, wenn der Gewichtsanteil des IML-Etiketts am Gesamtgewicht sehr klein ist. Optimal ist es jedoch, wenn das IML-Etikett aus dem gleichen Kunststoff wie der Behälter besteht. Dies ist für die Wiederverwertung günstig. Außerdem ergibt sich bei Werkstoffgleichheit eine sehr gute und dauerhafte Verbindung zwischen IML-Etikett und Behälter. Für die bevorzugten Materialien bedeutet dies beispielsweise ein Polyäthylen-Etikett für einen Polyäthylen-Behälter. Polyäthylen läßt sich mit den vorhandenen Techniken leichter wiederverwerten als Polypropylen und wird insoweit vorgezogen.

In wirtschaftlicher Hinsicht ist es besonders vorteilhaft, daß das erfindungsgemäße IML-Etikett einlagig ausgebildet ist und nur noch ggf. eine Haftvermittlerschicht trägt. Das IML-Etikett selbst kann durch seine Einlagigkeit wesentlich kostengünstiger als ein Mehrschichtenetikett hergestellt werden. Es hat sich ferner herausgestellt, daß es vorteilhafter ist, als Ausgangsmaterial für das IML-Etikett eine Flachfolie herzustellen als einen Folienschlauch. Für das einlagige IML-Etikett empfiehlt sich eine Stärke von vorzugsweise 0,1 mm und weniger, z.B. auch 0,085 mm.

Die Planlage und Formstabilität des IML-Etiketts ist für dessen Eignung für das IML-Verfahren bedeutsam. Die Planlage wird im weiteren günstig durch die Bedruckung im Tiefdruckverfahren beeinflußt.

Unter dem IML-Etikett wird im Sinne der Erfindung die bedruckte Folie oder ein sonstiger geeigneter Bedruckungsträger verstanden. Das eigentliche IML-Etikett kann zusätzlich noch mit einer Haftvermittler-Schicht versehen sein.

Der rückseitige Auftrag eines Hotmelts oder eines anderen IML-Haftvermittlers auf das IML-Etikett ist für die Planlage und Dimensionsstabilität vorteilhaft. Zu diesem Zweck empfiehlt es sich, den Hotmelt heiß auf die Etikettenrückseite aufzutragen und gleich darauf abzuschrecken und zum Erstarren zu bringen. Hierdurch wird das Etikettenmaterial getempert.

Für das IML-Verfahren ist es ferner günstig, wenn der Haftvermittler tropfenförmig mit einer Rasterung aufgetragen wird. Beim Blasvorgang kann dann die Luft durch den Freiraum zwischen den Tropfen schnell und ungehindert entweichen, was eine blasenfreie Einbettung des IML-Etiketts in der Behälterwand ermöglicht. Der Haftvermittler, insbesondere in Form eines Hotmelts, hat für den Blasvorgang ferner noch den Vorteil, daß er eine schützende Wärmeisolierung zwischen der heißen Behälterwand und dem IML-Etikett bildet.

Zur Erzielung eines guten Glanzes und einer hohen Brillianz des IML-Etiketts empfiehlt es sich, die extrudierte Folie durch eine Glätteinrichtung mit zwei Walzen zu schicken, zwischen denen die Folie unter Druck eingespannt, kalibriert und geglättet wird. Mit der Sichtseite des IML-Etiketts wird die Folie dabei unter Druck über eine spezielle Glättwalze geführt. Die gewünschten Ergebnisse ergeben sich für alle Werkstoffkombinationen des IML-Etiketts, wobei die Einhaltung der bevorzugten Zusammensetzungen zu besonders guten Effekten führt. Das Glättverfahren läßt sich mit den genannten Effekten und Vorteilen auch bei anderen IML-Etiketten und Folien durchführen, beispielsweise ein- oder mehrlagigen Folien und Materialzusammensetzungen nach dem Stand der Technik.

Das erfindungsgemäße IML-Etikett läßt sich mit beliebig geformten Kunststoffbehältern verbinden. Bevorzugte Behälterformen sind Flaschen oder Kanister.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen
- Fig. 1:: einen Behälter von der Seite mit zwei in Draufsicht und Seitenansicht dargestellten IML-Etiketten,
- Fig. 2:: einen abgebrochenen und vergrößerten Schnitt durch die Behälterwand,
- Fig. 3:: ein loses IML-Etikett in vergrößerter und abgebrochener Seitenansicht,
- Fig. 4:: eine Draufsicht auf die Unterseite des IML-Etiketts entsprechend Pfeil IV von Fig. 3,
- Fig. 5:: eine schematische Darstellung einer Anlage zur Etikettherstellung und
- Fig. 6:: eine vergrößerte Teilansicht der Behandlungsstation mit Glätteinrichtung von Fig.5.

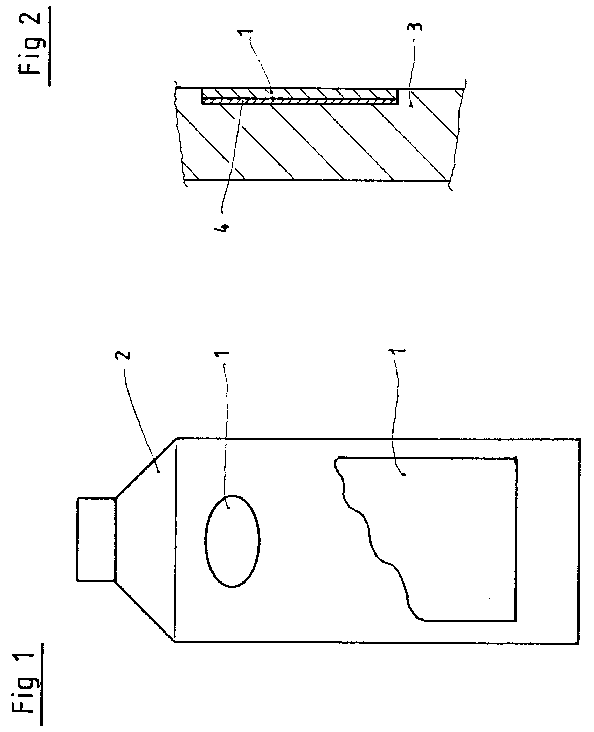

Fig. 1 zeigt einen Behälter (2) mit einem oder mehreren IML-Etiketten (1), die auch an verschiedenen Seiten angeordnet sein können. Wie Fig. 2 verdeutlicht, sind die IML-Etiketten (1) in der Behälterwand (3) eingebettet. Die Behälterwand (3) umgreift das IML-Etikett (1) dicht an den Rück- und Seitenflächen und schließt an der Oberfläche bündig mit diesem ab. Die Einbettung des IML-Etiketts (1) erfolgt während des Blasvorgangs bei der Behälterherstellung. Der Behälter (2) besteht selbst aus Kunststoff. Für Recyclingzwecke empfiehlt sich hierfür Polyäthylen oder Polypropylen, wobei ersteres günstigere Eigenschaften für die Wiederverwertung hat.

Das Einbetten des Etiketts erfolgt im sogenannten In-Mould-Labeling-Verfahren, wie es beispielsweise aus DE-Z "Papier- + Kunststoff-Verarbeiter", Nr. 12/84 bekannt ist. Ein oder mehrere IML-Etiketten werden vor dem Blasvorgang in die geöffnete Blasform eingelegt und vorläufig fixiert. Beim anschließenden Blasvorgang wird der heiße Folienschlauch, aus dem der Behälter geformt wird, gegen die Blasformwand gedrückt und umschließt dabei dicht das dort anliegende IML-Etikett.

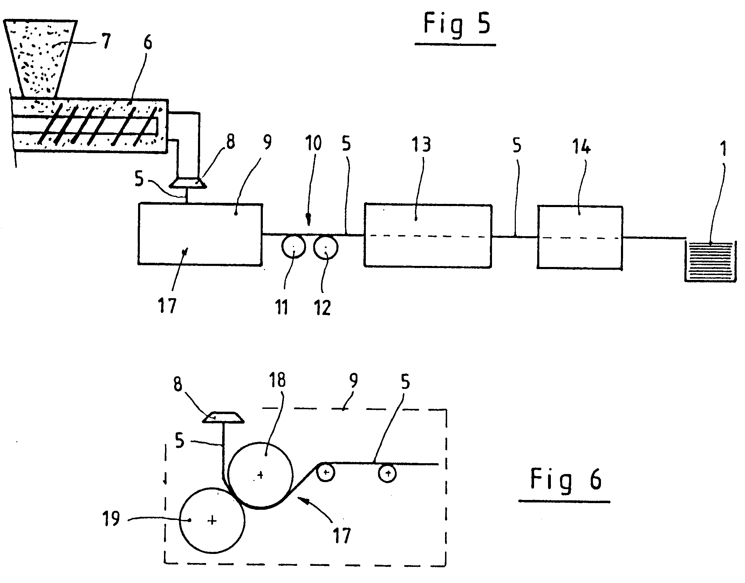

Das IML-Etikett (1) besteht aus einem Werkstoffgemisch, das eine Kunststoffkomponente aus Polyäthylen oder Polypropylen beinhaltet. Vorzugsweise kommt HD-Polyäthylen (High-Density-Polyäthylen) zum Einsatz. Es sind aber auch andere Arten von Polyäthylenen oder Polyäthylen-Mischwerkstoffen geeignet. Als weitere Komponenten sind ein Filler und gegebenenfalls ein Farbstoff-Zuschlag vorgesehen. Die verschiedenen Komponenten liegen als granuliertes Gemisch (7) vor, das zur Herstellung des folienförmigen Ausgangsmaterials für das IML-Etikett in einem Extruder (6) (vgl. Fig. 5) oder einer anderen geeigneten Vorrichtung verarbeitet wird.

Vorzugsweise besteht das IML-Etikett (1) im wesentlichen aus dem gleichen Werkstoff wie der Behälter (2). Für einen Polyäthylen-Behälter kommt damit ein IML-Etikett (1) aus Polyäthylen und für einen Polypropylen-Behälter ein IML-Etikett (1) aus Polypropylen zum Einsatz. Die Werkstoffgleichheit wirkt sich günstig auf die Recyclingfähigkeit des Behälters (2) mit dem eingebetteten und im allgemeinen nicht mehr entfernbaren IML-Etikett (1) aus.

Mit dem momentanen Stand der Kunststofftechnik eignen sich für die Wiederverwertung von thermoplastischen Kunststoffen im wesentlichen nur die genannten Werkstoffe Polyäthylen und Polypropylen. Der Gedanke der Werkstoffgleichheit von Behälter und IML-Etikett läßt sich aber auch auf beliebige andere in Zukunft recylingfähige Kunststoffe übertragen.

In der bevorzugten Ausführungsform besteht das Ausgangsgemisch (7) für das IML-Etikett (1) aus
ca. 50 bis 70 Gew.-% Filler,
ca. 45 bis 25 Gew.-% Polyäthylen, insbesondere HD-Polyäthylen oder alternativ Polypropylen und
ca. 5 Gew.-% Farbstoff.

Die Zusammensetzungen der drei Komponenten lassen sich innerhalb der Grenzen variieren. Für optimale Eigenschaften des IML-Etiketts empfiehlt sich folgende Zusammensetzung:
50 bis 60 Gew.-% Filler,
45 bis 35 Gew.-% HD-Polyäthylen und
5 Gew.-% Farbstoff.

Der Filler sollte eine geringe Feuchte von weniger als 0,1 % aufweisen. Hierzu wird das Filler-Rohmaterial unmittelbar vor der Verarbeitung zwei Stunden bei ca. 80° C erhitzt und getrocknet. Dies ist für Glanz, Brillianz, Druck- und Verarbeitungsqualität günstig.

Als Filler eignen sich unterschiedliche Materialien, wie Calciumcarbonat, Talkum, Titandioxid, Kieselerde oder dergleichen. Optimale Ergebnisse werden mit einem Filler erzielt, der unter der Bezeichnung "Papiercompound PPX" bei der Firma Westensee und Partner, Rohstoff GmbH in Winsen/Luhe bei Hamburg erhältlich ist. Der "Papiercompound" hat eine Dichte von 1,4 g pro Kubikzentimeter bei einer Schüttdichte von 0,8 und einem Schmelzindex 190/5 von 14 g/10 min. bzw. 190/2,16 von 5 g/10 min.

Als Farbstoff kommt ein sogenannter Master-Batch in Frage, der seinerseits Polyäthylen enthalten kann. Je nach gewünschter Farbart oder Grad der Durchfärbung können geeignete Farbstoffe aus dem vorhandenen Angebot ausgewählt werden.

Vorzugsweise besteht das IML-Etikett (1) nur aus einer Lage. Es beinhaltet auch vorzugsweise nur eine der vorgenannten Kunststoffkomponenten Polyäthylen oder Polypropylen in möglichst reiner Form. Das einlagige IML-Etikett (1) wird auf der Oberseite bedruckt und trägt auf der Unterseite gegebenenfalls noch einen Haftvermittler (4).

Als Haftvermittler (4) wird vorzugsweise ein Hotmelt als Beschichtung auf die Etikettenunterseite aufgetragen. Der Hotmelt besteht in an sich bekannter Weise aus Wachsen oder Wachsmischungen. Die Mischung kann auch ein Äthylen-Vinyl-Acetat-Copolymer, Paraffin oder dergleichen enthalten.

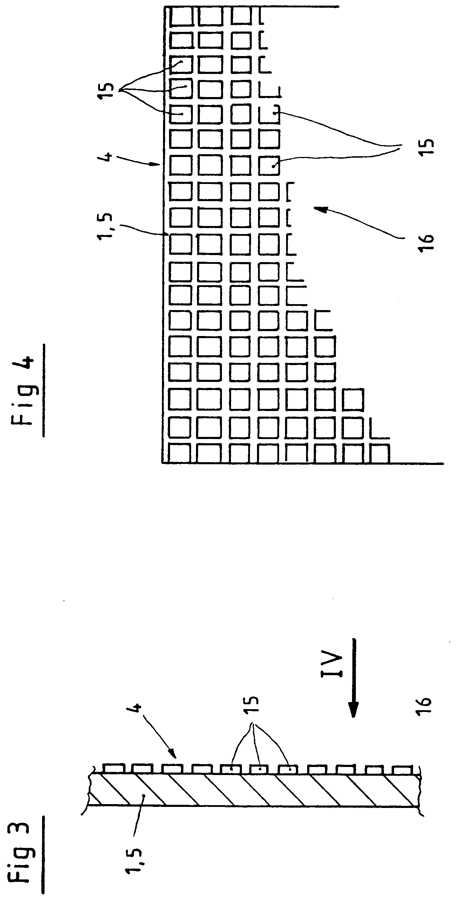

Wie Fig. 3 und 4 näher verdeutlichen, wird die Haftvermittlerschicht (4) in Form von einzelnen Tropfen (15) aufgebracht, die voneinander beabstandet und in einer Rasterung (16) angeordnet sind. Durch die freien Zwischenräume zwischen den einzelnen und vorzugsweise in einer gleichmäßigen Matrix angeordneten Tropfen (15) kann beim Blasformen die Luft nach außen treten und unter dem IML-Etikett (1) entweichen. Beim Blasformen ist die Haftvermittlerschicht (4) der Behälterwand (3) bzw. dem verformten Folienschlauch zugewandt. Der Haftvermittler (4) sorgt für eine feste und gegenüber Umwelteinflüssen widerstandsfähige Verklebung zwischen dem IML-Etikett (1) und der Behälterwand (3). Beim Blasformen bildet er außerdem eine wärmeisolierende Schicht zwischen dem IML-Etikett (1) und dem heißen Folienschlauch. Die thermische Belastbarkeit des IML-Etiketts (1) ist begrenzt.

Die Herstellung der IML-Etiketten (1) ist in Fig. 5 schematisch dargestellt. Die granulierte Ausgangsmischung (7) mit der vorerwähnten Zusammensetzung wird in einem Extruder (6) bei einer Verarbeitungstemperatur von vorzugsweise ca. 220° C plastifiziert und durch eine Breitschlitzdüse (8) gedrückt. Hierdurch wird eine einlagige Flachfolie (5) erzeugt, die in der unmittelbar nachgeschalteten Behandlungsstation (9) aufbereitet, insbesondere geglättet und kalibriert wird. Die Flachfolie (5) hat danach eine Dicke von vorzugsweise 0,1 mm oder weniger. Alternativ kann die Folie auch als Blasfolie hergestellt werden.

Wie Fig. 6 näher verdeutlicht, beinhaltet die Behandlungsstation (9) eine Glätteinrichtung (17) mit einer Glättwalze (18), über die die heiße Folie (5) mit der späteren Sicht- und Bedruckungsseite des IML-Etiketts (1) unter Anpreßdruck geführt wird. Die Glättwalze (18) ist präzise ausgewuchtet und gerichtet und besitzt einen besonders glatten, hartverchromten Mantel. Sie sorgt beim fertigen IML-Etikett (1) für Glanz und Brillianz.

Zur Erzielung des Anpreßdrucks auf der Glättwalze (18) ist vorzugsweise eine exakt ausgerichtete und positionierte Gegenwalze (19) vorgesehen, die einen einfacheren mattierten Mantel haben kann. Die beiden drehenden Walzen (18,19) sind gegenseitig zustellbar gelagert und bilden zwischen sich einen engen, exakt eingstellten Spalt, durch den die Folie (5) geführt und dabei kalibriert und geglättet wird. Anschließend wird die Folie (5) noch ein Stück über die Glättwalze (18) geführt und über den Zug der laufenden Bahn angedrückt.
Alternativ kann die Behandlungsstation (9) auch eine an sich bekannte Chill-Roll-Anlage beinhalten.

Die Folie (5) wird anschließend über eine Auftragsstation (10) für den Haftvermittler (4) geführt. Diese weist eine Auftragswalze (11) für den Hotmelt auf. Für den Rasterauftrag ist die Auftragswalze (11) im Mantel mit kleinen Mulden versehen. Der Hotmelt wird heiß aufgetragen und gleich darauf durch eine nachgeschaltete Kühlwalze (12) abgeschreckt und zum Erstarren gebracht.

In der anschließenden Druckstation (13) wird die Folie (5) auf der Oberseite bedruckt. Die Bedruckung erfolgt vorzugsweise im Tiefdruckverfahren. Durch die hohe Formstabilität der Folie (5) sind Mehrfachbedruckungen und Vielfarbendruck auch mit einfacheren Druckmaschinen problemlos möglich.

Anschließend wird die Folie (5) antistatisch behandelt, indem ein geeignetes Antistatikum aufgesprüht oder auf andere Weise aufgetragen wird.

In der Schnittstation (14) wird die Folie (5) in Bögen geschnitten, aus denen dann die IML-Etiketten (1) ausgestanzt werden. Die IML-Etiketten (1) können eine beliebige Umrißform haben. Die IML-Etiketten (1) werden anschließend verpackt. Bei Behälterherstellern werden sie wie bekannte Papieretiketten beim eingangs geschilderten Blasformvorgang in die Behälterwand nach dem IML-Verfahren eingebettet.

Die erfindungsgemäßen IML-Etiketten (1) haben die gleichen Verarbeitungseigenschaften wie Papieretiketten. Sie besitzen eine gute Planlage und rollen sich nicht ein oder verwerfen sich. Sie besitzen auch genügend Eigenstabilität, um stehend in einem Magazin an der Blasformmaschine gehalten zu werden. Sie haben außerdem eine hohe mechanische Festigkeit und Widerstandsfähigkeit gegenüber Beschädigungen.

### STÜCKLISTE

- 1: IML-Etikett
- 2: Behälter
- 3: Behälterwand
- 4: Haftvermittler, Beschichtung
- 5: Folie
- 6: Extruder
- 7: granuliertes Gemisch
- 8: Breitschlitzdüse
- 9: Behandlungsstation
- 10: Auftragsstation
- 11: Auftragswalze
- 12: Kühlwalze
- 13: Druckstation
- 14: Schnittstation
- 15: Tropfen
- 16: Rasterung, Matrix
- 17: Glätteinrichtung
- 18: Glättwalze
- 19: Gegenwalze

## Patentansprüche

1. In-Mould-Labeling-Etikett aus Kunststoff für wiederverwertbare Kunststoffbehälter, das bei der Behälterherstellung in der Behälterwand einbettbar ist, wobei das IML-Etikett (1) im wesentlichen aus Polyäthylen oder Polypropylen besteht, das durch einen Filler stabilisiert ist.

2. In-Mould-Labeling-Etikett nach Anspruch 1, dadurch **gekennzeichnet**, daß das IML-Etikett (1) im wesentlichen aus dem gleichen Kunststoff wie der Behälter (2) besteht.

3. In-Mould-Labeling-Etikett nach Anspruch 1 oder 2, dadurch **gekennzeichnet**, daß das IML-Etikett (1) im wesentlichen aus einer einzigen Kunststoffsorte besteht.

4. In-Mould-Labeling-Etikett nach Anspruch 1, 2 oder 3, dadurch **gekennzeichnet**, daß das IML-Etikett (1) einlagig ausgebildet ist.

5. In-Mould-Labeling-Etikett nach Anspruch 1, 2, 3 oder 4, dadurch **gekennzeichnet**, daß das IML-Etikett (1) als extrudierte Flachfolie oder als Blasfolie (5) ausgebildet ist.

6. In-Mould-Labeling-Etikett nach Anspruch 1 oder einem der folgenden, dadurch **gekennzeichnet**, daß die Folie (5) eine Stärke von vorzugsweise 0,1 mm oder weniger aufweist.

7. In-Mould-Labeling-Etikett nach Anspruch 1 oder einem der folgenden, dadurch **gekennzeichnet**, daß das IML-Etikett (1) aus HD-Polyäthylen besteht.

8. In-Mould-Labeling-Etikett nach Anspruch 1 oder einem der folgenden, dadurch **gekennzeichnet**, daß der Filler aus Calciumcarbonat, Talkum, Titandioxid oder Kieselerde besteht.

9. In-Mould-Labeling-Etikett nach Anspruch 1 oder 8, dadurch **gekennzeichnet**, daß der Filler bei der Herstellung des Ausgangsmaterials für das IML-Etikett eine Feuchte von weniger als 0,1 % aufweist.

10. In-Mould-Labeling-Etikett nach Anspruch 1 oder einem der folgenden, dadurch **gekennzeichnet**, daß das IML-Etikett (1) einen eingebauten Farbstoff aufweist.

11. In-Mould-Labeling-Etikett nach Anspruch 1 oder einem der folgenden, dadurch **gekennzeichnet**, daß das IML-Etikett (1) aus
- ca. 50 - 70 Gewichts-% Filler,
- ca. 45 - 25 Gewichts-% Polyäthylen, insbesondere HD-Polyäthylen oder Polypropylen und
- ca. 5 Gewichts-% Farbstoff
besteht.

12. In-Mould-Labeling-Etikett nach Anspruch 11, dadurch **gekennzeichnet**, daß das IML-Etikett (1) vorzugsweise aus
- 50 - 60 Gewichts-% Filler,
- 45 - 35 Gewichts-% HD-Polyäthylen und
- 5 Gewichts-% Farbstoff
besteht.

13. In-Mould-Labeling-Etikett nach Anspruch 1 oder einem der folgenden, dadurch **gekennzeichnet**, daß das IML-Etikett (1) rückseitig mit einem Haftvermittler (3), vorzugsweise einem Hotmelt, beschichtet ist.

14. In-Mould-Labeling-Etikett nach Anspruch 1 oder einem der folgenden, dadurch **gekennzeichnet**, daß das IML-Etikett (1) im Tiefdruck bedruckt ist.

15. In-Mould-Labeling-Etikett, insbesondere nach Anspruch 1 oder einem der folgenden, dadurch **gekennzeichnet**, daß das IML-Etikett (1) aus einer geglätteten glänzenden Folie (5) hergestellt ist, die in einer Glätteinrichtung (17) mit einer Glättwalze (18) unter Anpreßdruck kalibriert und geglättet ist.

16. Verfahren zur Herstellung eines In-Mould-Labeling-Etiketts aus Kunststoff für wiederverwertbare Kunststoffbehälter, das bei der Behälterherstellung in der Behälterwand einbettbar ist, wobei das IML-Etikett (1) im wesentlichen aus mit einem Filler stabilisierten Polyäthylen oder Polypropylen hergestellt wird.

17. Verfahren nach Anspruch 16, dadurch **gekennzeichnet**, daß das IML-Etikett (1) aus einem granulierten Gemisch (7) von
- ca. 50 - 70 Gew.-%, vorzugsweise 50 - 60 Gew.-% Filler,
- ca. 45 - 25 Gew.-%, vorzugsweise 45 - 35 Gew.-% Polyäthylen, insbesondere HD-Polyäthylen oder Polypropylen und
- ca. 5 Gewichts-% Farbstoff
hergestellt wird.

18. Verfahren nach Anspruch 16 oder 17, dadurch **gekennzeichnet**, daß der Filler unmittelbar vor der Verarbeitung erhitzt und auf eine Feuchte von weniger als 0,1 % getrocknet wird.

19. Verfahren nach Anspruch 16, 17 oder 18, dadurch **gekennzeichnet**, daß aus dem granulierten Gemisch (7) unter Erhitzung eine Folie (5) hergestellt wird.

20. Verfahren nach Anspruch 19, dadurch **gekennzeichnet**, daß die Folie (5) als Flachfolie oder Blasfolie hergestellt wird.

21. Verfahren nach Anspruch 16 oder einem der folgenden, dadurch **gekennzeichnet**, daß die Folie (5) einlagig ausgezogen wird.

22. Verfahren insbesondere nach Anspruch 16 oder einem der folgenden, dadurch **gekennzeichnet**, daß die Folie (5) mit Anpreßdruck über eine Glättwalze (18) geführt wird.

23. Verfahren nach Anspruch 16 oder einem der folgenden, dadurch **gekennzeichnet**, daß die Flachfolie (5) einer Corona-Behandlung unterworfen, mit einem Haftvermittler (4) beschichtet, bedruckt, antistatisch behandelt und zurechtgeschnitten wird.

24. Verfahren nach Anspruch 23, dadurch **gekennzeichnet**, daß der Haftvermittler (4) heiß aufgetragen und anschließend abgeschreckt wird.

25. Verfahren nach Anspruch 22, 23 oder 24, dadurch **gekennzeichnet**, daß der Haftvermittler (4) tropfenförmig mit einer Rasterung (16) aufgetragen wird.

26. Verfahren nach Anspruch 16 oder einem der folgenden, dadurch **gekennzeichnet**, daß die Folie (5) im Tiefdruckverfahren bedruckt wird.
